# EUROPEAN PATENT APPLICATION

(11) **EP 4 563 862 A1**
(43) Date of publication of application: **04.06.2025**
(21) Application number: 23213623.4
(22) Date of filing: 01.12.2023
(51) Int. Cl.: F16K 31/04, F16K 31/50, F16K 37/00

(54) **AUTOMATIC VALVE ACTUATOR WITH A DETECTION SYSTEM CONFIGURED TO SWITCH A MOTOR OF THE AUTOMATIC VALVE ACTUATOR DEPENDING ON A MOVEMENT OF A LEVER**

(71) Applicant: Danfoss A/S, 6430 Nordborg (DK)
(72) Inventor: KOSEC, Vojko, 6430 Nordborg (DK)
(74) Representative: Keil & Schaafhausen Patentanwälte PartGmbB

(57) **Abstract**

The present invention relates to an automatic valve actuator (1) for a valve element. The automatic valve actuator comprises a housing (5), a motor (7), a valve actuating assembly (2, 3) arranged inside said housing (5) and driven by said motor (7), wherein at least a first part (2) of said valve actuating assembly (2, 3) is axially moveable relative to said housing (5) along a longitudinal axis (x_{L}) between a first position, in which the valve element is in an open position, and a second position, in which the valve element is in a closed position, and a detection system (23) configured to switch said motor (7) between an on-state, in which said motor (7) drives said valve actuating assembly (2, 3), and an off-state, in which said motor (7) is stopped. In order to provide a detection mechanism for the valve actuator which is improved in terms of costs and precision, the automatic valve actuator (1) further comprises a lever (16) pivotably arranged inside said housing (5), wherein said lever (16) comprises an activation area (22) arranged offset to said axis (x_{L}), wherein said lever (16) is pivoted based on an axial movement of a second part (3) of said valve actuating assembly (2, 3), and wherein said detection system (23) is configured to switch said motor (7) depending on a movement of said activation area (22) of said lever (16).

## Description

The present invention relates to an automatic valve actuator for a valve element.

Automatic valve actuators, for example smart digital valve actuators, are known in the art and use valve actuating assemblies to move valve elements into an open or closed position based on a control signal and thus to control a fluid flow. For example, automatic valve actuators are used in combination with pressure independent balancing control valves. Depending on the control signal, a motor of the automatic valve actuator starts to drive the valve actuating assembly and thereby to move the valve element, for example, from a closed position to a fully opened position. In this fully opened position, the valve actuating assembly is unloaded.

To ensure that the motor stops running when the fully opened position of the valve element is reached, the use of sensors or switches, for example microswitches, is known. Typically, the sensors or switches, which are arranged on a circuit board assembly, for example on a PCBA, are configured to detect when the valve actuating assembly is unloaded. In other words, it is known to detect the end position of the valve actuating assembly in a retraction direction, in which the valve element is fully opened.

However, the detection mechanisms known in the art have several disadvantages. Firstly, time-consuming and complicated preparatory measures are required to adjust the switch and the valve actuating assembly so that the switch is triggered when the end position is reached or at least close to this end position. This precision is extremely important to enable exact valve actuation. Hence, preparatory measures are necessary, which are cost-intensive and are regularly lacking performance. Secondly, for example, reliability and durability of microswitches in such applications is at least questionable.

The object of the present invention is, therefore, to provide a detection mechanism for an automatic valve actuator which is improved in terms of cost and precision.

The object is solved by an automatic valve actuator according to claim 1.

The automatic valve actuator for a valve element, i.e. for example to open and close the valve element, comprises a housing. The housing may comprise several parts, openings for cables, sealings, clips or the like. The automatic valve actuator further comprises a motor, for example an electric motor. The motor may be arranged inside the housing. The motor may be connected to an internal or external power supply, for example by a power cable, and/or may be connected to a control unit, for example wirelessly.

In addition, a valve actuating assembly which is arranged inside the housing, is driven by the motor. The valve actuating assembly comprises at least a first part, which is axially moveable relative to the housing along a longitudinal axis between a first position, in which the valve element is in an open position, and a second position, in which the valve element is in a closed position. The first position and the second position of the valve actuating assembly may thus be end positions. The longitudinal axis may be parallel to the direction of movement of the first part. Further, the longitudinal axis may be congruent with the direction of movement of the first part. The valve actuating assembly may at least be axially coupled to a valve element, for example, the valve actuating assembly may be coupled to a valve stem in order to move the valve element between the closed and open position.

Further, the automatic valve actuator comprises a detection system. The detection system is configured to switch the motor between an on-state and an off-state upon detection of an axial movement of an activation area. In this regard, the detection system may comprise a control unit. Further, the detection system may comprise an electro optical system for detection. In the on-state, which may also be called a not-activated state, the motor drives said valve actuating assembly. In the off-state, which may also be called an activated state, the motor is stopped. Driving said valve actuating assembly in the on-state may not necessarily mean that the valve element is moved. The motor may for example still be driving the valve actuating assembly, when the valve element is already in the fully opened position. The automatic valve actuator may comprise a circuit board assembly. The electronic components of the automatic valve actuator, such as the detection system, the motor or the like may be electrically connected to the circuit board assembly.

The automatic valve actuator may further comprise a lever pivotably arranged inside the housing. The lever may thus comprise a pivot axis about which the lever is pivoted. The pivot axis may run through a pivot point of the lever. The pivot axis may be at least substantially perpendicular to the longitudinal axis. The lever comprises an activation area arranged offset to the longitudinal axis. The activation area may further be offset to the pivot axis. The activation area may be a surface area of the lever whose movement is detected by the detection system. The activation area may be purely defined by its function and may not be visually distinguished from the rest of the surface area of the lever. However, the activation area may also be specially prepared, for example the surface area of the activation area may comprise a material coating or a surface finish or a pattern different from the rest of the surface area of the lever. Or the lever material used must not be transparent to the light used in the detection system. The lever may comprise a first end and a second end. The activation area may be located close to one end of the lever or may be located between the ends of the lever. The activation area may also be defined by an additional component, for example, a metallic or magnetic or reflective component, arranged on the lever. In this regard, the lever may comprise a main body and an activation area as a separate part, which may be coupled to the main body of the lever.

Furthermore, the lever is pivoted based on an axial movement of a second part of the valve actuating assembly. In this regard, the second part may be axially moveable between a first activation position and a second activation position, wherein the first part may be in the first position when the second part may be moved between the first activation position and the second activation position. In other words, the first part may already be in the unloaded position, i.e. in a position in which the valve element is in a fully opened position, when the second part may be moved between the activation positions. Hence, the valve element may be fully opened or fully retracted, when the second part may be moved between the activation positions. The axial movement of the second part between the first activation position and the second activation position may be opposite to the direction of movement of first part when being retracted. Further, the second part may also be axially moveable along the longitudinal axis. Alternatively, the second part may comprise a separate axis along which the second part may be moved, wherein this axis runs parallel or at least substantially parallel to the longitudinal axis.

The detection system is configured to switch the motor depending on a movement of the activation area of the lever. In other words, the detection system is configured to switch the motor in the on-state or the off-state depending on the movement of the activation area of the lever. In summary, the lever may therefore be pivoted by the axial movement of the second part of the valve actuating assembly, wherein a pivoting movement of the lever may move the activation area, the movement of which may then be detected by the detection system.

Using the lever, or to be more precise, using detection of the movement of the activation area of the lever instead of directly detecting the movement of the second part, for example, by a microswitch allows to magnify, multiply, or amplify the axial movement of the second part by the lever. Consequently, even a small movement of the second part may lead to a greater movement of the activation area of the lever. The amplification of the movement of the second part by the lever may thus minimize the difference between the real unloaded position and the one detected by the detection system. Hence, detection of the end position of the first part is more precise. A movement that would previously not have triggered a switch without the lever, may now allow the activation of a switch or the detection of a movement and thus detection by the detection system. The lever may thus be seen as an amplifier, multiplier or magnifier. In addition, detecting the movement of the activation area of the lever allows the use of different, simpler and less stressed detection systems. For example, the movement of the activation area may be detected without contact between the activation area and the detection system. Further, due to the lever it may be possible to convert a multidimensional movement of the second part, which may be helical for example, i.e. a combined axial and rotational movement, into an essentially one-dimensional movement of the activation area. Hence, detection becomes less complex.

According to one embodiment, the movement of the activation area may be greater in distance than the axial movement of said second part of said valve actuating assembly. Consequently, and as mentioned above, the lever does not only allow detection of a movement offset to the second part, but also to magnify, amplify, or multiply the movement. The lever may double or triple the axial movement of the second part. In other words, the activation area may move a distance that is twice or three times as great as the corresponding axial movement of the second part. Preferably, the axial movement of the second part is at least quadrupled by the lever. For example, when the second part moves 1 millimeter in the retraction direction, the activation area may move 4 millimeters.

In one embodiment, the movement of the activation area may be at least partially parallel to the longitudinal axis. Thus, when the lever pivots due to the axial movement of the second part, the activation area may move at least partially parallel to the longitudinal axis. If the lever would be freely pivotable around the pivot axis, the activation area would form a circular path, with one movement direction of the circular movement may be at least partially parallel to the longitudinal axis. With small pivot movements of the lever, the movement of the activation area may be essentially parallel to the longitudinal axis. A sensor output of the detection system may increase or decrease due to the movement of the activation area. For example, the change in distance between the activation area and the detection system at least partially parallel to the longitudinal axis may increase or decrease the sensor output. Due to the essentially parallel movement in relation to the longitudinal axis, the movement of the activation area of the lever may be easily correlated with the movement of interest, i.e. the movement of the second part.

According to one embodiment, the lever may comprise an abutment portion. The abutment portion of the lever may abut against the second part of the valve actuating assembly. The abutment portion may be arranged on one side of the lever opposite the activation area. For example, the lever may rest on the second part, wherein the abutment portion may define a portion of a surface of the lever that forms an interface of the lever with the second part. The abutment portion may also comprise a special coating or may be provided by a component attached to the main body of the lever. The abutment portion allows to couple the movement of the lever directly to the movement of the second part. Accordingly, movement of the activation area may be directly related to the movement of the second part.

In a further embodiment, a pivot axis of the lever may be arranged offset to the activation area of the lever and the abutment portion of the lever. The lever may pivot about the pivot axis, wherein the pivot axis may thus run through the pivot point of the lever. Further, a first offset may define an absolute value of a distance between the activation area of the lever and the pivot axis of the lever. A second offset may define an absolute value of a distance between the abutment portion of the lever and the pivot axis of the lever. The absolute value of the first offset may be greater than the second offset. In this context, "absolute" means that there are no negative or positive distances, but that the absolute values of the are taken into account. The distances or offsets may be measured parallel to the direction of extension of the lever. However, if, for example, the activation area and the abutment portion of the lever are arranged on opposite sides of the lever, the distance may also be the shortest distance between the activation area and the abutment portion and may thus run through the lever. The pivot axis may be located near one end of the lever. However, the pivot axis may also be positioned further towards the center of the lever. The abutment portion may be located near one end of the lever. However, the abutment portion may also be positioned further in the direction of the center of the lever. Further, a third offset may define an absolute value of a distance between the abutment portion and the activation area. The third offset may be the sum of the first offset and the second offset, when the pivot axis is arranged between the abutment portion and the activation area. Alternatively and preferably, however, the first offset may be the sum of the second offset and the third offset. The respective arrangement of the abutment portion, the pivot axis and the activation area allow to amplify, magnify or multiply the movement of the second part by a desired amount.

According to one embodiment, the automatic valve actuator may comprise at least one spring element, for example a leg spring, configured to force the lever and the second part of the valve actuating assembly into abutment. The spring force may thus at least partially act towards the second part. The spring element may also force the activation area and the detection system into contact, when the second part of the valve actuating assembly may not act on the lever, i.e. when second part is not causing a pivoting movement of the lever. Further, due to the spring element a reliable contact between the lever and the abutment portion may be achieved. The spring element may alternatively or additionally be a pin shaped spring. The spring element may be integrated into a circuit board assembly of the automatic actuator assembly to facilitate the assembly of automatic valve actuator. To be more precise, the spring element may be integrated into a fixture of the circuit board assembly.

Further, in one embodiment, the detection system may detect when the activation area of said lever may reach or may depart the detection system. In this regard, the activation area may contact the detection system. However, contact is not necessarily required in order to detect reaching or departure of the activation area. Thus, "to reach" may only mean that the activation area moves towards the detection system, wherein the detection system may then detect this movement. The detection system may detect an overlap, a reflection, a field or similar. The detection system may be configured to switch the motor in an on-state or an off-state depending on a position of the activation area of the lever relative to the detection system. In other words, depending on the movement bringing the activation area and the detection system into or out of contact or closer together or further apart, the detection system may be configured to switch the motor. Consequently, the detection system may comprise a threshold value which when reached due to the movement of the activation area, for example due to a change in a sensor output, the motor is switched on or off. Thus, the threshold value may be a sensor output threshold value. However, the detection system may for example comprise a mechanical switch, which may be actuated by the movement of the activation area.

In one embodiment, the motor may be transferred in the off-state, when the activation area departs from the detection system. The activation area may for example actuate a microswitch, when the activation area departs the detection system. For example, the lever may pivot, and the activation area of the lever may move away from the detection system if the second part pushes or loads the abutment portion of the lever.

According to one embodiment, the second part of the valve actuating assembly may be axially, for example, helically, moved thereby pivoting the lever, when the first part of the valve actuating assembly may be in the first position. Accordingly, the first part may already be in the first position, in which the valve element may be in an open position. The motor may thus still be running when the first part is in the first position, wherein the valve element may not move. The axial movement of the second part after the first part is in the first position is thus required to switch the motor. In addition, detecting the movement of the second part with the help of the lever has the advantage that the motor may be switched off even if the first part may be blocked and may not reach the end position.

In one embodiment, the second part of the valve actuating assembly may be axially moved along the longitudinal axis in a direction of movement which is opposite to the direction of movement of the first part of the valve actuating assembly from the second position into the first position. In other words, the first part and the second part may move axially in parallel or on the same axis but in opposite directions. For example, the first part may axially move from the second position into the first position in order to retract the valve element, i.e. in the retraction direction. When the first part is in the first position, the second part may move in the extension direction, opposite to the retraction direction, causing the lever to pivot.

In one embodiment, the detection system may comprise an optocoupler or a microswitch. Hence, the detection system may use an electro optical system for detection of axial movement of the activation area. Preferably, the detection system switches the motor without any contact between the activation area and the detection system.

According to one embodiment, the first part may comprise at least a threaded stem. The second part may comprise a nut. The nut may be rotationally moveable with respect to the housing and driven by the motor. The nut may for example be driven by a gear driven by the motor. The nut and the gear together may form the second part. The motor may thus drive the gear which may then drive the nut. The nut may be configured to force the threaded stem into axial movement along the longitudinal axis upon rotation of the nut. For example, the nut may comprise an inner thread which may be in engagement with an outer thread of the threaded stem. The outer thread of the threaded stem may be actuated by the inner thread of the nut. The threaded stem may thus be axially moved, when the nut is for example rotated. Further, the threaded stem may at least be axially coupled with respect to the valve element, preferably directly to the valve element. The threaded stem may for example be coupled to the valve stem. The valve stem may move the valve element between the open and closed position upon axial movement of the threaded stem. The threaded stem and/or the valve stem may be guided in a guiding portion provided inside the housing. The guiding portion may prevent or block rotational movement of the threaded stem and/or the valve stem with respect to the housing. For example, guiding teeth or guiding ribs may be provided, which may interact with the guiding portion. The threaded stem and/or the valve stem may thus perform a purely axial movement. Additionally, a bearing may be arranged inside the housing, which may support rotational movement of the respective components of the valve actuating assembly.

In one embodiment, the nut may be axially moveable with respect to the threaded stem. The lever may be pivoted based on an axial movement of the nut. For example, axial movement of the nut may axially move a gear which may then pivot the lever. However, axial movement of the nut may also directly pivot the lever. Once the threaded stem may be moved in the first position, in which the valve element may be in the open position, the motor may still run and thereby rotate the nut. The nut may thus descend the outer thread of the threaded stem from the first activation position into the second activation position, wherein axial movement of the nut pivots the lever. The nut may thus be helically moved with respect to the first part. However, it is the axial movement of the nut which causes pivoting of the lever. In other words, engagement between the inner thread of the nut and the outer thread of the threaded stem may allow the nut to move further backwards, i.e. the nut moves in a direction opposite to the direction the threaded stem has moved for opening the valve element. Hence, when the threaded stem has moved in a retraction direction for opening the valve element, the nut moves in an extension direction or closing direction to pivot the lever. The axial movement of the nut may move the lever directly or indirectly. Therefore, the nut may either directly contact the lever, wherein axial movement of the nut in the extension direction causes the lever to pivot, or the nut may axially move the gear when descending the outer thread of the threaded stem, wherein the gear unloads the lever, and wherein the axial movement of the gear in the extension direction causes the lever to pivot. Detection of the movement of the lever may then switch the state of the motor. Other transmission components, transmitting the axial movement of the nut onto the lever may be conceivable.

According to one embodiment, the lever may comprise an opening, for example a through hole. The first part of the valve actuating assembly may be moveable inside said opening without contacting the lever. During manufacturing of the automatic valve actuator, for example, the lever may be placed over one end of the threaded stem. The opening may further allow a space-saving and low-friction arrangement.

In one embodiment, the lever may comprise a polymer material, for example polyamide. However, the lever may also comprise further materials. In one embodiment, only the main body of the lever is made of a polymer material. Hence, the activation area and/or the abutment portion of the lever may be made of different materials than the rest of the lever. Using a polymer material for the lever has many advantages, for example the use of polymer material allows manufacturing of an inexpensive lever with a comparably low weight, wherein the lever is robust, and its shape may be designed with fewer restrictions compared to other materials.

In summary, the automatic valve actuator may thus provide an improved detection mechanism, which allows to detect the presence of the activation area and thereby to switch the motor of the valve actuator. The axial movement of the activation area may thereby represent an enlarged movement in relation to the axial movement of the second part of the valve actuating assembly. The invention may, for example, be implemented in one of the following valve actuators: AME110 NL or NovoCon S.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: shows a partially sectional view of an automatic valve actuator in a not-activated state;
- Fig. 2: shows a partially sectional view of the automatic valve actuator of Figure 1 in an activated state;
- Fig. 3: shows a detailed view of section A of Figure 2;
- Fig. 4: shows a first example of a lever; and
- Fig. 5: shows a second example of a lever.

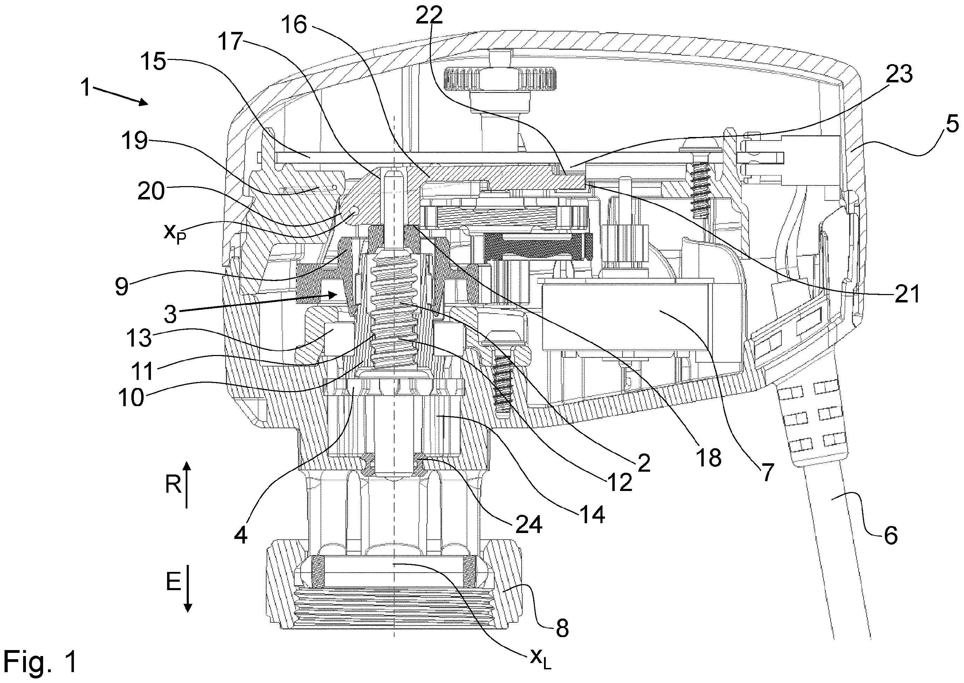

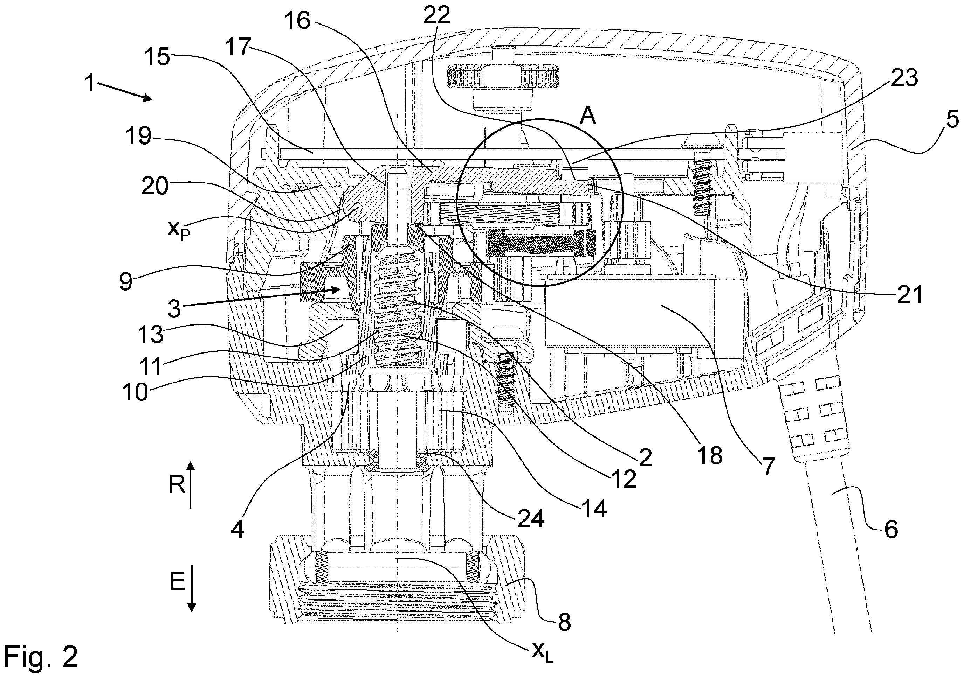

Figures 1 and 2 both show a partially sectional view of an automatic valve actuator 1. Here, "partially sectional" means that some components of the automatic valve actuator 1 are shown in section, wherein other components of the automatic valve actuator 1 are not shown section. For example, a first part 2 of the automatic valve actuator 1 is not shown in section, wherein a second part 3 is shown in section. Further, for example, guiding teeth 4 are also not shown in section.

The automatic valve actuator 1 comprises a housing 5 with two housing parts coupled together and an inlet for a power cable 6, which is used to supply a motor 7. In addition, the housing 5 comprises a valve connection section 8, which is configured to be coupled to a valve. When the automatic valve actuator 1 is coupled to the valve, the automatic valve actuator 1 is configured to control the position of a valve element of the valve.

In this regard, the automatic valve actuator 1 comprises a gear 9 which is configured to be driven by the motor 7. The gear 9 and a nut 10, which is rotationally constrained to the gear 9, form the second part 3 of the automatic valve actuator 1. Together with the first part 2, the second part 3 forms a valve actuating assembly. Rotational movement of the gear 9 is directly transferred to the nut 10. The second part 3 may thus be driven by the motor 7, wherein the gear 9 rotates together with the nut 10. However, the motor 7 may for example also be directly coupled to the nut 10.

The nut 10 comprises an inner thread 11 which is in engagement with an outer thread 12 of the first part 2. Here the first part 2 is a threaded stem. Consequently, rotational movement of the nut 10, moves the first part 2 of the automatic valve actuator 1.

In more detail, upon rotation of the gear 9, the nut 10, which is coupled by a bearing 13 to the housing 5 allowing limited axial movement with respect to the housing 5, rotates. The rotational movement is transferred to the first part 2 via the threaded engagement formed by the inner thread 11 and the outer thread 12 between the first part 2 and the nut 10. When the nut 10 is rotated to move the first part 2 in a closing direction or in an extension direction thereby closing the valve element, rotational movement of the second part 3 is transferred into an axial movement of the first part 2 along longitudinal axis x_{L}. To do so, the housing 5 comprises a guiding portion 14 in which the guiding teeth 4 of the first part 2 are guided. Hence, rotational movement of the nut 10, which is driven by the motor 7 via the gear 9, axially moves the first part 2, and thus the valve element, which may be coupled to the first part 2, for example, via a valve stem.

However, the axial movement of the first part 2 is limited both in the extension direction, in which the valve element is closed, and in a retraction direction, in which the valve element is opened. When the valve element is retracted and the motor 7 rotates the gear 9 and the nut 10, the first part 2 moves away from the valve connection section 8. In other words, the first part 2 moves in the retraction direction. Here, the first part 2 moves towards a circuit board assembly 15, which may be a PCBA.

In Figures 1 and 2, the direction of retraction is indicated by arrow "R" and the direction of extension by arrow "E". The retraction direction may also be called opening direction. The extension direction may also be called closing direction. The extension direction is a counter-direction of the retraction direction. In other words, the extension direction points in the opposite direction as the retraction direction.

Although the first part 2 is no longer moved in the retraction direction when the valve element is fully retracted and thus fully opened, the motor 7 still continues to run. Consequently, the second part 3 continues to rotate, as the gear 9 is still driven by the motor 7 and coupled to the nut 10. The nut 10 may thus descend the outer thread 12 of the threaded stem, i.e. of the first part 2, from the first activation position, in which the valve element is in the fully open position but the second part 3 is not moved further in the retraction direction, into the second activation position. To reach the second activation position the nut 10 descends the threaded stem and helically moves backwards in the extension direction, i.e. in the counter-direction the threaded stem has moved for opening the valve element. In other words, the nut 10 moves in a direction opposite the retraction direction of the first part 2. Axial movement of the nut 10 thus axially moves the gear 9 together with the nut 10 in this counter-direction, opposite to the retraction direction and in the direction of the extension direction. This axial movement of the gear 9 may thus result in partly unloading and pivoting a lever 16. This means that the lever 16, which was previously held in position by the gear 9, now pivots as the gear 9 axially moves in the extension direction.

In other words, engagement between the inner thread 11 of the nut 10 and the outer thread 12 of the threaded stem may allow the nut 10 to move in the counter-retraction direction, wherein the axial movement of the nut 10 may pivot the lever 16.

The lever 16 comprises an opening 17, here a through hole, into which the first part 2 extends. Further, an abutment portion 18 is provided on a surface area of the lever 16 facing the gear 9. The lever 16 may thus rest on the gear 9 as shown in Figures 1 and 2. A spring element 19, which is indicated in Figure 1 and 2, may exert a spring force that holds the lever 16 and the gear 9 in abutment. In other words, the spring element 19 pushes or presses the abutment portion 18 of the lever 16 against the gear 9. Axial movement of the nut 10 in the extension direction moves the gear 9. When the nut 10 is axially moved in the extension direction, the spring element 19 maintains the abutment between the abutment portion 18 and the gear 9 by pushing the lever 16 in the extension direction. Hence, axial movement of the nut 10 may thus allow the spring element 19 to push the lever 16 and the gear 9 in the extension direction.

Depending on the axial movement of the second part 3, the lever 16 pivots about a pivot axis x_{P}. For example, the lever 16 may pivot about the pivot axis x_{P} when the second part 3 moves axially in the both directions, i.e. the retraction or the extension direction. Here, the pivot axis x_{P} is arranged close to a first end 20 of the lever 16 opposite to a second end 21.

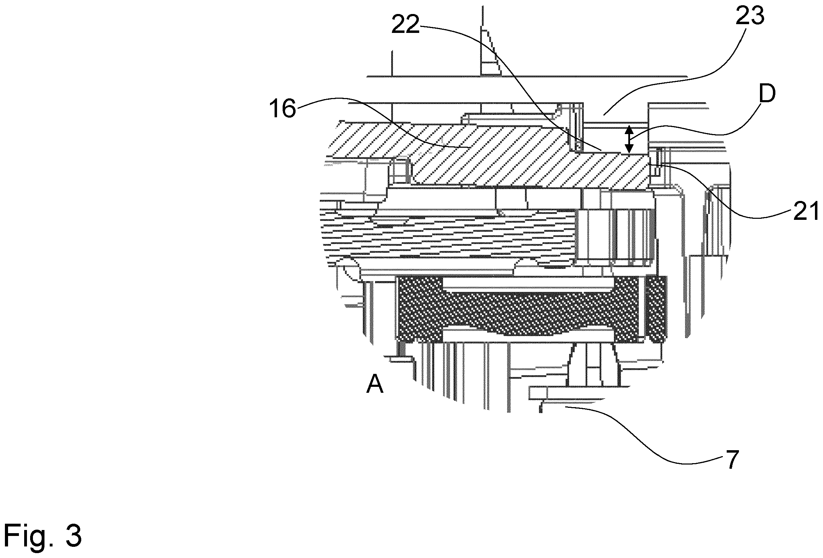

Due to the pivoting movement of the lever 16 about the pivot axis x_{P}, an activation area 22, which is arranged near the second end 21 of the lever 16, departs from a detection system 23. Here, the detection system 23 is directly arranged on and electrically connected to the circuit board assembly 15. Departure of the activation area 22 changes the distance between the detection system 23 and the activation area 22. This change in distance may be recognized by comparing the relative position of the lever 16 in Figures 1 and 2. Figure 3 shows a detailed view of section A of Figure 2. The distance between the detection system 23 and the activation area 22 caused by pivoting the lever 16 is here indicated by a doubleheaded arrow D.

In Figure 1, the activation area 22 is close to the detection system 23. Presence of the activation area 22 may thus be detected and the motor 7 may thus be in the on-state. The switch formed by the activation area 22 and the detection system 23 may thus not be activated and the automatic valve actuator 1 is in a not-activated state. In Figure 2, the second part 3, or to be more precise, the gear 9 partly unloaded the lever 16, i.e. the abutment portion 18 of the lever 16, by moving in the extension direction, which caused the activation area 22 to depart from the detection system 23. Therefore, this movement of the activation area 22 may resulted in distance D between the activation area 22 and the detection system 23 shown in Figure 3. Although Figure 3 may show a final position of the lever 16, i.e. a position of the lever 16, wherein the distance between the activation area 22 and the detection 23 is greatest, the detection system 23 may already detected the change in state, or to be more precise the change in distance between the activation area 22 and the detection system 23, from the initial departure of the activation area 22 from the detection system 23. Thus, the detection system 23 may already detect a change in distance as soon as the activation area 22 departs from the detection system 23. The change in distance between the activation area 22 and the detection system 23 may result in a change in sensor output. In this regard, the detection system 23 may comprise an electro optical system for detection. For example, the detection system 23 may comprise an optocoupler.

Due to the departing movement of the activation area 22 of the lever 16, the motor 7 has been switched to an off-state. In other words, the detection system 23, which is configured to switch the motor 7 between the off-state and an on-state, was activated by moving the activation area 22 away from the detection system 23. The automatic valve actuator 1 is therefore in an activated state in which the motor 7 is switched off. The valve element may therefore be in the end position or at least the first part 2 has not moved any further into the retraction direction due to the rotation of the nut 10.

In order to move the valve element into the closed position, the motor 7 may receive a switching signal, for example from a control unit, which may then switch the motor 7 back into the on-state in the opposite rotation. The motor 7 may thus start rotating gear 9 and therefore the nut 10, however, now in the opposite direction relative to the direction of rotation that was necessary for the movement in the retraction direction. Hence, the gear 9 again loads the bearing 13 and moves in the retraction direction. As a result, the first part 2 extends due to the rotation of the nut 10 and closes the valve element. The lever 16 moves back in the not-activated position starting position. The spring element 19 may then follow the lever 16 to the not-activated starting position in Figure 1.

Further, to protect the electronics of the automatic valve actuator 1, for example from fluid, the housing 5 comprises a sealing 24 on the valve connection section 8 side. The sealing 24 may also be used to guide the first part 2, when axially moved from a fully extended into a fully retracted position or vice versa.

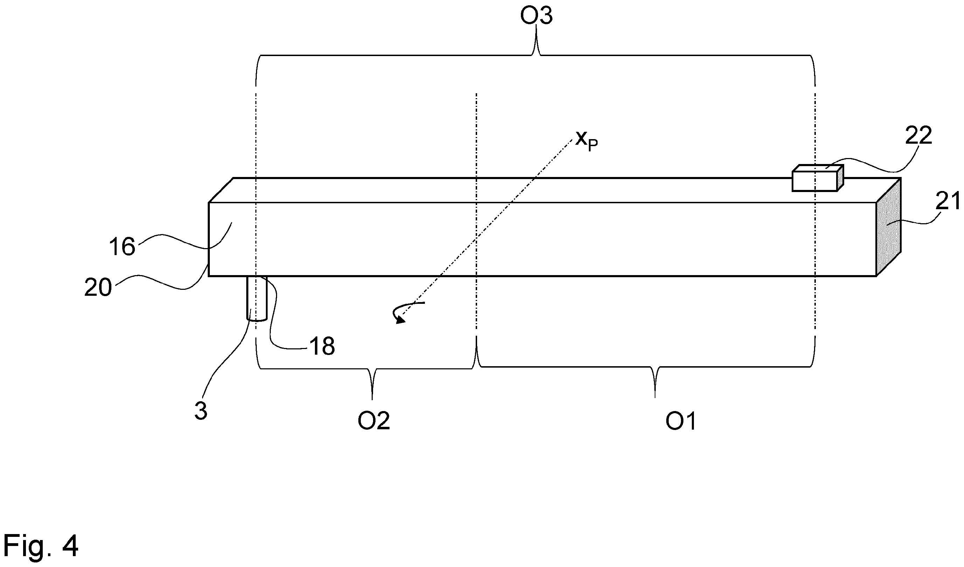

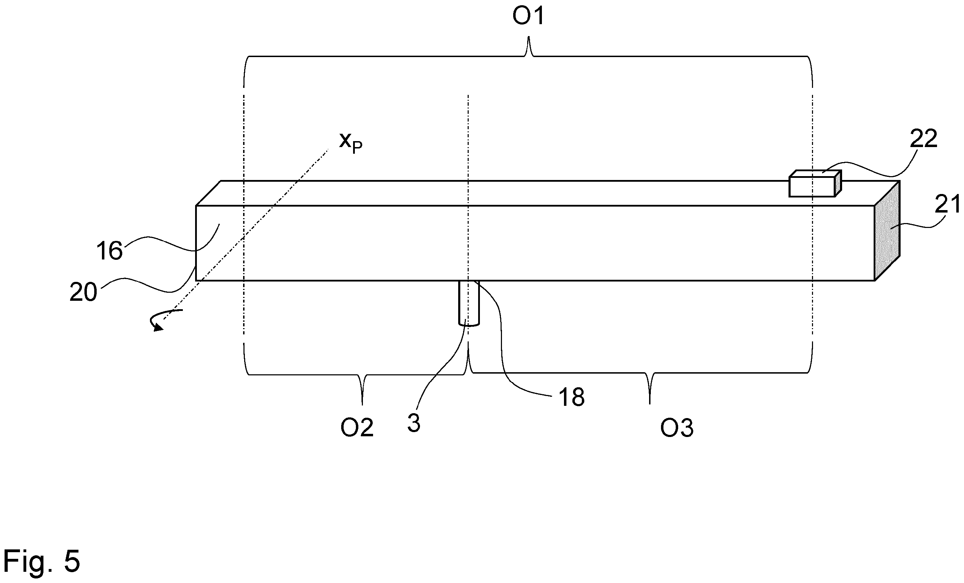

Figures 4 and 5 show schematic examples of levers 16, wherein the abutment portion 18, the pivot axis x_{P} and the activation area 22 are arranged in two different configurations. In this regard, a first offset O1 defines the offset between the pivot axis x_{P} and the activation area 22 of the lever 16. A second offset O2 defines the offset between the abutment portion 18 of the lever 16 and the pivot axis x_{P}. A third offset O3 defines the offset between the abutment portion 18 of the lever 16 and the activation area 22 of the lever 16. The offsets O1 to O3 are shown here as distances parallel to the direction of extension of the lever 16 from the first end 20 to the second end 21.

However, the distances or offsets may also be measured directly. For example, the third offset O3 in Figure 5 may also be measured directly between one side of the lever 16 on which the abutment portion 18 is located and the other side of the lever 16 on which the activation area 22 is located. In other words, the offset may be the shortest distance between the respective portions, areas and axes. Accordingly, the third offset O3 may then run substantially diagonally between the abutment portion 18 and the activation area 22. The vertical dashed lines in Figures 4 and 5 only help to determine the offsets O1, O2 and O3. In addition, the arrow on the pivot axis x_{P} indicates a possible pivoting movement of the lever 16.

In summary, the automatic valve actuator 1 provides a detection mechanism which is configured to detect an end position of the valve actuating assembly. Due to the amplification of the axial movement by the lever 16, the detection mechanism is more precise. In addition, the detection mechanism is cheap and robust and thus allows for an improved detection of end positions of automatic valve actuators.

### List of reference signs

- 1: Automatic valve actuator
- 2: First part
- 3: Second part
- 4: Guiding teeth
- 5: Housing
- 6: Power cable
- 7: Motor
- 8: Valve connection section
- 9: Gear
- 10: Nut
- 11: Inner Thread
- 12: Outer Thread
- 13: Bearing
- 14: Guiding portion
- 15: Circuit board assembly
- 16: Lever
- 17: Opening
- 18: Abutment portion
- 19: Spring element
- 20: First end
- 21: Second end
- 22: Activation area
- 23: Detection system
- 24: Sealing

- D: Distance (distance between the detection system and the activation area caused by pivoting the lever)

- R: Retraction (direction)
- E: Extension (direction)

- O1: First offset
- O2: Second offset
- O3: Third offset

- X_{P}: Pivot axis
- X_{L}: Longitudinal axis

## Claims

1. Automatic valve actuator (1) for a valve element comprising:
• a housing (5),
• a motor (7),
• a valve actuating assembly (2, 3) arranged inside said housing (5) and driven by said motor (7), wherein at least a first part (2) of said valve actuating assembly (2, 3) is axially moveable relative to said housing (5) along a longitudinal axis (x_{L}) between a first position, in which the valve element is in an open position, and a second position, in which the valve element is in a closed position, and
• a detection system (23) configured to switch said motor (7) between an on-state, in which said motor (7) drives said valve actuating assembly (2, 3), and an off-state, in which said motor (7) is stopped,
**characterized in that** the automatic valve actuator (1) further comprises a lever (16) pivotably arranged inside said housing (5), wherein said lever (16) comprises an activation area (22) arranged offset to said axis (x_{L}), wherein said lever (16) is pivoted based on an axial movement of a second part (3) of said valve actuating assembly (2, 3), and wherein said detection system (23) is configured to switch said motor (7) depending on a movement of said activation area (22) of said lever (16).

2. Automatic valve actuator (1) according to claim 1, **characterized in that** the movement of said activation area (22) is greater in distance than the axial movement of said second part (3) of said valve actuating assembly (2, 3).

3. Automatic valve actuator (1) according any one of the preceding claims, **characterized in that** said movement of said activation area (22) is at least partially parallel to said axis (x_{L}).

4. Automatic valve actuator (1) according any one of the preceding claims, **characterized in that** an abutment portion (18) of said lever (16) abuts against said second part (3).

5. Automatic valve actuator (1) according any one of the preceding claims, **characterized in that** a pivot axis (x_{P}) of said lever (16) is arranged offset to said activation area (22) of said lever (16) and said abutment portion (18) of said lever (16), wherein a first offset (O1) defines an absolute value of a distance between said activation area (22) of said lever (16) and said pivot axis (x_{P}) of said lever (16), wherein a second offset (O2) defines an absolute value of a distance between said abutment portion (18) of said lever (16) and said pivot axis (x_{P}) of said lever (16), and wherein the absolute value of said first offset (O1) is greater than said second offset (O2).

6. Automatic valve actuator (1) according to claim 5, **characterized in that** the automatic valve actuator (1) comprises at least one spring element (19), for example a leg spring, configured to force said lever (16) and said second part (3) of the valve actuating assembly (2, 3) into abutment.

7. Automatic valve actuator (1) according to any of the preceding claims, **characterized in that** said detection system (23) detects when said activation area (22) of said lever (16) reaches or departs said detection system (23), and wherein said detection system (23) is configured to switch said motor (7) depending on a position of said activation area (22) of said lever (16) relative to said detection system (23).

8. Automatic valve actuator (1) according to claim 7, **characterized in that** said motor (7) is transferred in said off-state, when said activation area (22) departs from said detection system (23).

9. Automatic valve actuator (1) according to any of the preceding claims, **characterized in that** said second part (3) of said valve actuating assembly (2, 3) is axially moved thereby pivoting said lever (16), when said first part (2) of said valve actuating assembly (2, 3) is in said first position.

10. Automatic valve actuator (1) according to any of the preceding claims, **characterized in that** said second part (3) of said valve actuating assembly (2, 3) is axially moved along said axis (x_{L}) in a direction of movement which is opposite to the direction of movement of said first part (2) of said valve actuating assembly (2, 3) from the second position into the first position.

11. Automatic valve actuator (1) according to any of the preceding claims, **characterized in that** the detection system (23) comprises an optocoupler or a microswitch.

12. Automatic valve actuator (1) according to any of the preceding claims, **characterized in that** the first part (2) comprises at least a threaded stem, wherein the second part (3) comprises a nut (10), wherein said nut (10) is rotationally moveable with respect to said housing (5) and driven by said motor (7), for example by a gear (9) driven by said motor (7), and wherein said nut (10) is configured to force said threaded stem into axial movement along said axis (x_{L}) upon rotation of said nut (10).

13. Automatic valve actuator (1) according to claim 12, **characterized in that** said nut (10) is axially moveable with respect to said threaded stem, and wherein said lever (16) is pivoted based on an axial movement of said nut (10).

14. Automatic valve actuator (1) according to any of the preceding claims, **characterized in that** said lever (16) comprises an opening (17), for example a through hole, and wherein said first part (2) of said valve actuating assembly (2, 3) is moveable inside said opening (17) without contacting said lever (16).

15. Automatic valve actuator (1) according to any of the preceding claims, **characterized in that** said lever (16) comprises a polymer material, for example polyamide.
